Europäisches Patentamt

(19) European Patent Office

Office européen des brevets

(11) Numéro de publication: **0 052 562**
**B1**

# (12) FASCICULE DE BREVET EUROPEEN

(45) Date de publication du fascicule du brevet:
**16.05.84**

(21) Numéro de dépôt: **81401778.6**

(22) Date de dépôt: **10.11.81**

(51) Int. Cl.³: **D 04 H 1/64,** C 08 L 25/10,
C 08 F 279/02

(54) **Nontissés et notamment voiles à usage hygiénique.**

(30) Priorité: **19.11.80 FR 8024517**

(43) Date de publication de la demande:
**26.05.82 Bulletin 82/21**

(45) Mention de la délivrance du brevet:
**16.05.84 Bulletin 84/20**

(84) Etats contractants désignés:
**AT BE CH DE FR GB IT LI LU NL SE**

(56) Documents cités:
**US - A - 3 255 276**
**US - A - 3 985 831**

(73) Titulaire: **RHONE-POULENC SPECIALITES CHIMIQUES,**
**"Les Miroirs" 18, Avenue d'Alsace, F-92400 Courbevoie**
**(FR)**

(72) Inventeur: **Chauvel, Bernard, 24, Chemin de la**
**Commanderie, F-95120 Ermont (FR)**

(74) Mandataire: **Fabre, Madeleine-France et al,**
**RHONE-POULENC RECHERCHES Service Brevets**
**Chimie et Polymères 25, quai Paul Doumer,**
**F-92408 Courbevoie Cedex (FR)**

## Nontissés et notamment voiles à usage hygiénique

La présente invention concerne des nontissés et notamment des voiles à usage hygiénique. Elle concerne également un procédé de fabrication desdits nontissés.

Les nontissés hygiéniques à usage unique tels qu'enveloppes de couche bébé, serviettes périodiques, pansements, etc. . . . comprennent une nappe de fibres fixées par au moins un liant. On a déjà proposé, comme liants pour cette application, des polymères synthétiques tels que des copolymères de butadiène et de styrène, des copolymères carboxylés de butadiène et de styrène, des copolymères de chlorure de vinyle et d'acrylate d'alkyle, des copolymères carboxylés de chlorure de vinyle et d'acrylate d'alkyle, des copolymères de chlorure de vinyle et de chlorure de vinylidène, des copolymères carboxylés de chlorure de vinyle et de chlorure de vinylidène, des polyacrylates d'alkyle, des polyacrylates d'alkyle carboxylés.

L'obtention des nontissés s'effectue à partir de nappes de fibres, préparées par les procédés par voie sèche et par voie humide, auxquelles on fait subir une opération de liage. L'opération de liage ne comprend dans la plupart des cas qu'un liage partiel, sur une des faces de la nappe de fibres, réalisé selon un procédé classique d'impression ou selon l'une des autres techniques connues (liage par précipitation dans la masse, pulvérisation, saturation, etc. . . .).

Dans la plupart des cas le bain employé lors de l'opération de liage contient le polymère synthétique, sous forme de latex, en tant que liant, un épaississant permettant de régler la viscosité du bain et, partant, le poids du dépôt, éventuellement un agent tensioactif, et éventuellement un agent antimousse. Après liage la nappe de fibres est séchée dans un four. Comme épaississants on utilise généralement des corboxyméthylcelluloses ou leurs dérivés, des polyacrylates de sodium, des polyméthacrylates de sodium, ou des émulsions aqueuses d'acides polyacryliques.

Parmi les qualités demandées aux nontissés se trouvent la résistance à la rupture, en particulier en milieu humide, l'aptitude à la thermosoudure à cadence élevée, l'hydrophilie et un faible niveau de blocking.

Les nontissés selon l'invention comprennent une nappe de fibres fixées par au moins un liant, ledit liant étant un interpolymère composé d'un copolymère A de butadiène, de styrène et d'au moins un acide carboxylique insaturé éthylénique et d'un polymère B de bis(2-chloroéthyl)vinylphosphonate au moins en partie greffé sur le copolymère A.

La demanderesse a en effet trouvé qu'en tant que liant ledit interpolymère conduit à un nontissé présentant une meilleure aptitude à la thermosoudure à cadence élevée et une hydrophilie plus élevée que le copolymère A correspondant.

A titre préférentiel l'interpolymère est composé de 80 à 99% en poids de copolymère A et de 20 à 1% en poids de polymère B.

A titre également préférentiel le copolymère A comprend en poids 25 à 55% de butadiène, 35 à 74% de styrène et 1 à 10% d'au poins un acide carboxylique insaturé éthylénique.

A titre également préférentiel le polymère B comprend en poids 15 à 100% de bis(2-chloroéthyl)vinylphosphonate et 0 à 85% d'au moins un composé insaturé éthylénique copolymérisable avec le bis(2-chloroéthyl)vinylphosphonate.

A titre également préférentiel la partie de l'interpolymère insoluble dans l'alcool isopropylique représente au moins 75% de l'interpolymère et comprend, à l'état greffé, 0,2 à 15% en poids de bis(2-chloroéthyl)vinylphosphonate.

Parmi les acides carboxyliques insaturés éthyléniques entrant dans la composition du copolymère A on peut citer notamment l'acide acrylique, l'acide méthacrylique, l'acide itaconique, l'acide maléique, et l'acide fumarique.

Comme composés copolymérisables avec le bis(2-chloroéthyl)vinylphosphonate on peut citer notamment les composés vinylaromatiques, les halogénures de vinyle, les halogénures de vinylidène, les composés diéniques, les esters vinyliques d'acide carboxylique, les composés acryliques. On peut citer plus particulièrement le styrène, l'$\alpha$-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, l'acide acrylique, l'acide méthacrylique, l'acrylamide, le méthacrylamide, le nitrile acrylique, le nitrile méthacrylique, le chloroacrylonitrile, l'acétate de vinyle, les esters de l'acide acrylique tels que l'acrylate de méthyle, l'acrylate d'éthyle, l'acrylate d'hydroxyéthyle, l'acrylate d'hydroxypropyle, l'acrylate de n-butyle, l'acrylate d'isobutyle, les esters de l'acide méthacrylique tels que le méthacrylate de méthyle, le methacrylate d'éthyle, le méthacrylate d'hydroxyéthyle, le méthacrylate d'hydroxypropyle, le méthacrylate de n-butyle, le méthacrylate d'isobuxyle.

Selon le procédé de l'invention on met une nappe de fibres en contact avec un bain de liage à base d'un latex de polymère, on la comprime pour assurer la pénétration du polymère dans la nappe puis on la sèche, ledit polymère étant un interpolymère composé d'un copolymère A de butadiène, de styrène et d'au moins un acide carboxylique insaturé éthylénique et d'un polymère B de bis(2-chloroéthyl)vinylphosphonate au moins en partie greffé sur le copolymère A. Ledit latex est une dispersion aqueuse de particules de l'interpolymère de diamètre compris essentiellement entre 0,1 et 1 µm.

La teneur pondérale du latex de l'interpolymère en matières sèches est généralement comprise

0 052 562

entre 1 et 70% et de préférence entre 30 et 55%.

Un moyen de préparer un latex de l'interpolymère consiste à préparer un latex de copolymère A par polymérisation en émulsion de butadiène, de styrène et d'au moins un acide carboxylique insaturé éthylénique, puis à polymériser, en présence du latex de copolymère A, du bis(2-chloroéthyl)vinyl-phosphonate et éventuellement au moins un composé insaturé éthylénique copolymérisable avec le bis(2-chloroéthyl)vinylphosphonate.

Le latex de copolymère A est préparé de façon en soi connue par polymérisation en émulsion aqueuse de butadiène, de styrène et d'au moins un acide carboxylique insaturé éthylénique, en présence d'au moins un initiateur et d'au moins un agent émulsifiant avec une concentration en mélange des monomères dans le milieu réactionnel comprise généralement entre 20 et 60% en poids.

Le butadiène représente généralement entre 15 et 85% et de préférence entre 25 et 55% en poids du total des monomères à polymériser.

Le styrène représente généralement entre 5 et 84% et de préférence entre 35 et 74% en poids du total des monomères à polymériser.

La quantité d'acide carboxylique mis en oeuvre est généralement comprise entre 1 et 10% en poids par rapport au total des monomères à polymériser.

Les monomères mis en oeuvre peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant on met en oeuvre les agents anioniques classiques représentés notamment par les sels d'acides gras, les alkylsulfates, les alkylsulfonates, les arylsulfates, les arylsulfonates, les alkylarylsulfates, les alkylarylsulfonates, les sulfosuccinates, les alkylphosphates de métaux alcalins, les sels de l'acide abiétique hydrogénés ou non. Ils sont employés à raison de 0,01 à 5% en poids par rapport au total des monomères.

L'initiateur, qui est hydrosoluble, est représenté plus particulièrement par les hydroperoxydes tels que l'eau oxygénée, l'hydroperoxyde de cumène, l'hydroperoxyde de diisopropylbenzène, l'hydroperoxyde de paramenthane, et par les persulfates tels que le persulfate de sodium, le persulfate de potassium, le persulfate d'ammonium. Il est employé en quantités comprises entre 0,05 et 2% en poids par rapport au total des monomères. Ces initiateurs sont éventuellement associés à un réducteur, comme par exemple le bisulfite ou le formaldéhydesulfoxylate de sodium, les polyéthylèneamines, les sucres: dextrose, saccharose, les sels métalliques. Les quantités de réducteur utilisées varient de 0 à 3% en poids par rapport au total des monomères.

s,'primé en pourcentage.

La température de réaction, fonction de l'initiateur mis en oeuvre, est généralement comprise entre 0 et 110°C et de préférence entre 25 et 90°C.

La polymérisation du bis(2-chloroéthyl)vinylphosphonate, et éventuellement d'un composé copolymérisable avec le bis(2-chloroéthyl)vinylphosphonate, en présence du copolymère A est effectuée en émulsion aqueuse en présence ou non d'un agent émulsifiant, d'un initiateur de polymérisation et éventuellement d'un agent de transfert avec une concentration du total copolymère A + monomère(s) dans le milieu réactionnel comprise entre 20 et 70% en poids.

La quantité de latex de copolymère A mis en oeuvre est telle que le copolymère A représente généralement 80 à 99% en poids du total copolymère A + monomère(s).

L'initiateur, identique à ou différent de celui mis en oeuvre pour la préparation du copolymère A, est choisi parmi les initiateurs mentionnés plus haut. Il est employé en quantités comprises entre 0,05 et 6% en poids par rapport au(x) monomère(s).

L'agent émulsifiant présent dans le latex de copolymère A est généralement suffisant pour maintenir la stabilité de l'émulsion au cours de la polymérisation. Cependant, dans certains cas, il peut être utile d'ajouter un supplément d'agent émulsifiant identique à ou différent de celui utilisé pour la préparation du copolymère A. Cet agent émulsifiant est choisi dans la liste donnée précédemment. Il est introduit à raison de 0 à 2,5% en poids par rapport au total copolymère A + monomère(s).

L'agent de transfert mis en oeuvre dans des proportions allant de 0 à 3% en poids par rapport au(x) monomère(s) est généralement choisi parmi les mercaptans tels que le N-dodécylmercaptan, le tertiododécylmercaptan; le cyclohexène; les hydrocarbures halogénés tels que le chloroforme, le bromoforme, le tétrachlorure de carbone. Il permet de régler la proportion de polymère greffé et la longueur des chaînes moléculaires greffées. Il est ajouté au milieu réactionnel soit avant la polymérisation, soit en cours de polymérisation.

La température de réaction, fonction du monomère copolymérisable avec le bis(2-chloroéthyl)vinylphosphonate et de l'initiateur mis en oeuvre, est généralement comprise entre 0 et 110°C et de préférence entre 25 et 90°C.

L'exemple qui suit, dans lequel les parties sont indiquées en poids, est destiné à illustrer l'invention.

3

Exemple 1

Préparation du copolymère A

Dans un autoclave en acier inoxydable, muni d'un agitateur, on introduit:

- 43 parties de butadiène,
- 53 parties de styrène,
- 100 parties d'eau désionisée,
- 2 parties d'acide acrylique,
- 2 parties d'acide itaconique,
- 0,5 partie de laurylsulfate de sodium,
- 0,8 partie de persulfate d'ammonium.

On chauffe le mélange réactionnel à 75°C et maintient cette température pendant la durée de la réaction. Après 10 heures de réaction le taux de transformation est de l'ordre de 98%. On dégaze le butadiène qui n'a pas réagi. Les particules du latex obtenu ont un diamètre d'environ 0,15 μm et une composition sensiblement équivalente à celle des produits mis en oeuvre.

Polymérisation en présence du copolymère A

Dans un autoclave en acier inoxydable, muni d'un agitateur, on introduit:

- 88 parties de copolymère A sous forme du latex préparé précédemment,
- 5,4 parties de bis(2-chloroéthyl)vinylphosphonate,
- 6,6 parties de méthacrylate de méthyle,
- 1 partie de soude.

On porte la température du milieu réactionnel à 75°C et introduit dans l'autoclave 0,48 partie de persulfate d'ammonium dissous dans 10 parties d'eau désionisée. On maintient cette température pendant 4 heures, on porte la température à 85°C et la maintient pendant 3 heures puis refroidit jusqu'à la température ambiante. On obtient un latex d'interpolymère utilisable selon l'invention, dont les caractéristiques sont données dans le tableau 1.

Tableau 1

| Teneur pondérale du latex d'interpolymère en matières sèches (%) | Proportion d'interpolymère insoluble dans l'acool isoprolique (%) | Teneur pondérale en bis(2-chloroéthyl) vinylphosphonate, présent à l'état greffé, de la partie de l'interpolymère insoluble dans l'alcool isopropylique (%) |
| --- | --- | --- |
| 49,6 | 85,4 | 4,5 |

La proportion d'interpolymère insoluble dans l'alcool isopropylique est déterminée à l'aide de la méthode suivante:

A partir du latex à examiner on prépare sur une plaque de verre un film de $^{15}/_{100}$ mm d'épaisseur (mesurée à l'état humide) que l'on fait sécher 2 heures à la température ambiante puis 2 heures à l'étuve à 50°C. On prélève dans ce film un échantillon d'interpolymère de poids Po voisin de 200 mg que l'on place dans un sachet fabriqué à partir d'un papier filtre. On suspend le sachet contenant l'interpolymère pendant 7 heures dans de l'alcool isopropylique chauffé à reflux. Après égouttage et essorage du sachet sur papier filtre sec et élimination de l'alcool isopropylique par séjour de l'échantillon d'interpolymère à l'étuve à 110°C pendant 15 heures on détermine le poids P dudit échantillon. La proportion d'interpolymère insoluble dans l'alcool isopropylique est donnée par le rapport $\frac{P}{P_o}$ exprimé en pourcentage.

La teneur pondérale en bis(2-chloroéthyl)vinylphosphonate, présent à l'état greffé, de la partie de l'interpolymère insuloble dans l'alcool isopropylique est déterminée par dosage, selon les méthodes

4

d'analyse élémentaire, du phosphore contenu dans ladite partie de l'interpolymère.

## Fabrication du nontissé

On réalise le liage partiel sur une face d'une nappe de fibres cardées en viscose de 1,5 dtex et de 40 mm de longueur. Le liant est déposé sur la nappe de fibres à l'aide d'un rouleau partiellement immergé dans le bain de liage, puis la nappe imprégnée est comprimée entre deux cylindres qui assurent la pénétration du liant dans la nappe. La nappe est ensuite séchée dans un four tunnel à la température de 150°C pendant 2 minutes.

Le nontissé ainsi obtenu est examiné au point de vue résistance à la rupture, aptitude à la thermosoudure, hydrophilie et niveau de blocking à l'aide des méthodes suivantes:

## Résistance à la rupture

Elle est déterminée au moyen d'un dynamomètre connu industriellement sous l'appellation »Lhomargy«. Les conditions de la mesure sont les suivantes:

— Dimensions des éprouvettes      5 × 20 cm,
— Conditionnement des éprouvettes au moins 24 heures à la température de 20°C dans une atmosphère à 65% d'himidité relative,
— Vitesse de traction      10 cm/min,
— Distance initiale entre machoires      15 cm.

Les mesures sont faites dans le sens longitudinal et dans le sens transversal. Elles sont faites à sec. Elles sont également faites à l'humide, c'est-à-dire immédiatement après immersion dans de l'eau à 20°C.

## Aptitude à la thermosoudure

Elle est déterminée au moyen du dynamomètre »Lhomargy« par mesure de la résistance à l'arrachement de deux échantillons soudés de nontissé dont la soudure a été réalisée entre des machoires mobiles portées à 150°C et fonctionnant à la cadence de 100 coups par minute. Les conditions de la mesure sont les suivantes:

— Dimensions des éprouvettes      5 × 20 cm,
— mise en température des éprouvettes à 20°C dans une atmosphère à 65% d'humidité relative,
— Vitesse de traction      10 cm/min.

Les mesures sont faites sur deux échantillons soudés par leur face enduite et sur deux échantillons soudés par leur face non enduite.

## Hydrophilie

Elle est déterminée par mesure du temps de mouillage d'un échantillon de nontissé de 101 × 10 mm conditionné 24 heures à la température de 20°C dans une atmosphère à 65% d'humidité relative. L'échantillon est plié d'abord en deux puis en deux de façon à obtenir un carré de 5 cm de côté. On place à chaque coin du carré ainsi formé un attache lettre en aluminium pesant environ 0,07 g puis soumet l'échantillon à une pression d'environ 100 kPa. On pose ensuite doucement l'échantillon à la surface d'un bain d'eau distillée. Le temps de mouillage est le temps écoulé lorsque toute la surface de l'échantillon est mouillée.

## Niveau de blocking

Il est déterminé au moyen du dynamomètre »Lhomargy« par mesure de la force nécessaire pour séparer deux échantillons de nontissé appliqués l'un sur l'autre, face enduite sur face non enduite, sous une pression de 400 MPa pendant 15 minutes à température ambiante. Les conditions de la mesure sont les suivantes:

— Dimension des éprouvettes      5 × 20 cm,
— Conditionnement des éprouvettes 1 heures à la température de 20°C dans une atmosphère à 65% d'humidité relative,
— Vitesse de traction      10 cm/min.

Pour l'obtention des bains de liage le latex de l'interpolymère et le latex du copolymère A, examiné à titre comparatif, sont dilués avec de l'eau jusqu'à une teneur en matières sèches de 40% en poids, puis additionnés de polyméthacrylate de soude jusqu'à ce que leur viscosité soit d'environ 1,2 Pa · s.

Le tableau 2 indique les résultats obtenus. Il indique également le poids du nontissé et celui de liant déposé.

Tableau 2

|  | Essai comparatif | Exemple 1 |
|---|---|---|
| Poids du nontissé (g/m²) | 19,9 ± 0,3 | 19,5 ± 0,3 |
| Poids de liant déposé (g/m²) | 5,0 | 4,5 |
| Résistance à la rupture (cN/5 cm) |  |  |
| — sens longitudinal |  |  |
| . à sec | 3300 ± 200 | 3500 ± 100 |
| . à l'humide | 1750 ± 100 | 1750 ± 100 |
| — sens transversal |  |  |
| . à sec | 570 ± 20 | 570 ± 20 |
| . à l'humide | 280 ± 20 | 280 ± 20 |
| Aptitude à la thermosoudure (cN/5 cm) |  |  |
| — faces enduites | 175 ± 25 | 225 ± 35 |
| — faces non enduites | 200 ± 25 | 310 ± 25 |
| Hydrophilie (secondes) | 294 | 27 |
| Niveau de blocking (cN/5 cm) | 215 | 215 |

On voit que le nontissé comprenant une nappe de fibres fixées par l'interpolymère présente une meilleure aptitude à la thermosoudure et une hydrophilie plus élevée que celui comprenant la même nappe de fibres fixées par le copolymère A correspondant.

**Revendications**

1. Nontissés comprenant une nappe de fibres fixées par au moins un liant, caractérisés par le fait que ledit liant est un interpolymère composé d'un copolymère A de butadiène, de styrène et d'au moins un acide carboxylique insaturé éthylénique et d'un polymère B de bis(2-chloroéthyl)vinylphosphonate au moins en partie greffé sur le copolymère A.

2. Nontissés selon la revendication 1, caractérisés par le fait que l'interpolymère est composé de 80 à 99% en poids de copolymère A et de 20 à 1% en poids de polymère B.

3. Nontissés selon l'une quelconque des revendications 1 et 2, caractérisés par le fait que le copolymère A comprend en poids 25 à 55% de butadiène, 35 à 74% de styrène et 1 à 10% d'au moins un acide carboxylique insaturé éthylénique.

4. Nontissés selon l'une quelconque des revendications 1 à 3, caractérisés par le fait que le polymère B comprend en poids 15 à 100% de bis(2-chloroéthyl)vinylphosphonate et 0 à 85% d'au moins un composé insaturé éthylénique copolymérisable avec le bis(2-chloroéthyl)vinylphosphonate.

5. Nontissés selon l'une quelconque des revendications 1 à 4, caractérisés par le fait que la partie de l'interpolymère insuluble dans l'alcool isopropylique représente au moins 75% de l'interpolymère et contient, à l'état greffé, 0,2 à 15% en poids de bis(2-chloroéthyl)vinylphosphonate.

6. Nontissés selon l'une quelconque des revendications 1 à 5, caractérisés par le fait que l'acide carboxylique est choisi dans le groupe formé par l'acide acrylique, l'acide méthacrylique, l'acide itaconique, l'acide maléique et l'acide fumarique.

7. Nontissés selon la revendication 4, caractérisés par le fait que le composé copolymérisable avec le bis(2-chloroéthyl)vinylphosphonate est choisi dans le groupe formé par les composés vinylaromatiques, les halogénures de vinyle, les halogénures de vinylidène, les composés diéniques, les esters vinyliques d'acide carboxylique, les composés acryliques.

8. Nontissés selon la revendication 7, caractérisés par le fait que le composé copolymérisable avec le bis(2-chloroéthyl)vinylphosphonate est choisi dans le groupe formé par le styrène, 1'$\alpha$-méthylstyrène, la paratertiobutylstyrène, le chlorostyrène, le vinyltoluène, le chlorure de vinyle, le bromure de vinyle, le flourure de vinyle, le chlorure de vinylidène, le butadiène, l'isoprène, le chloroprène, l'acide acrylique, l'acide méthacrylique, l'acrylamide, le méthacrylamide, le nitrile acrylique, le nitrile méthacrylique, le chloroacrylonitrile, l'acétate de vinyle, les esters de l'acide acrylique, les esters de l'acide méthacrylique.

9. Nontissés selon la revendication 8, caractérisés par le fait que le composé copolymérisable avec le bis(2-chloroéthyl)vinylphosphonate est choisi dans le groupe formé par l'acrylate de méthyle, l'acrylate d'éthyle, l'acrylate d'hydroxyéthyle, l'acrylate d'hydroxypropyle, l'acrylate de n-butyle, l'acrylate d'isobutyle, le méthacrylate de méthyle, le méthacrylate d'éthyle, le méthacrylate d'hydroxyéthyle, le méthacrylate d'hydroxypropyle, le méthacrylate de n-butyle, le méthacrylate d'isobutyle.

10. Procédé de fabrication des nontissés selon l'une quelconque des revendications 1 à 9 selon lequel on met une nappe de fibres en contact avec un bain de liage à base d'un latex de polymère, on la comprime pour assurer la pénétration du polymère dans la nappe puis on la sèche.

**Patentansprüche**

1. Vliesstoffe enthaltend eine Schicht aus mit mindestens einem Bindemittel fixierten Fasern, dadurch gekennzeichnet, daß das Bindemittel ein Interpolymer ist, bestehend aus einem Copolymeren A aus Butadien, Styrol und mindestens einer ethylenisch ungesättigten Carbonsäure und aus einem Polymeren B aus Bis(2-chlorethyl)vinylphosphonat, das zumindest teilweise auf dem Copolymeren A aufgepfropft ist.

2. Vliesstoffe nach Anspruch 1, dadurch gekennzeichnet, daß das Interpolymer aus 80 bis 99 Gew.-% Copolymer A und 20 bis 1 Gew.-% Polymer B besteht.

3. Vliesstoffe nach einem der Ansprüche 1 oder 2, dadurch gekennzeichnet, daß Copolymer A 22 bis 55 Gew.-% Butadien, 35 bis 74 Gew.-% Styrol und 1 bis 10 Gew.-% mindestens einer ethylenisch ungesättigten Carbonsäure umfaßt.

4. Vliesstoffe nach einem der Ansprüche 1 bis 3, dadurch gekennzeichnet, daß das Polymer B 15 bis 100 Gew.-% Bis(2-chlorethyl)vinylphosphonat und 0 bis 85 Gew.-% mindestens einer mit dem Bis(2-chlorethyl)vinylphosphonat copolymerisierbaren, ethylenisch ungesättigten Verbindung umfaßt.

5. Vliesstoffe nach einem der Ansprüche 1 bis 4, dadurch gekennzeichnet, daß der in Isopropylalkohol unlösliche Anteil des Interpolymeren mindestens 75% des Interpolymeren ausmacht und 0,2 bis 15 Gew.-% Bis(2-chlorethyl)vinylphosphonat aufgepfropft enthält.

6. Vliesstoffe nach einem der Ansprüche 1 bis 5, dadurch gekennzeichnet, daß die Carbonsäure ausgewählt ist aus der Gruppe bestehend aus Acrylsäure, Mehtacrylsäure, Itaconsäure, Maleinsäure und Fumarsäure.

7. Vliesstoffe nach Anspruch 4, dadurch gekennzeichnet, daß die mit Bis(2-chlorethyl)vinylphosphonat copolymerisierbare Verbindung ausgewählt ist aus der Gruppe bestehend aus den vinylaromatischen Verbindungen, Vinylhalogeniden, Vinylidenhalogeniden, Dienverbindungen, Vinylestern von Carbonsäuren und Acrylverbindungen.

8. Vliesstoffe nach Anspruch 7, dadurch gekennzeichnet, daß die mit Bis(2-chlorethylen)vinylphosphonat copolymerisierbare Verbindung ausgewählt ist aus der Gruppe bestehend aus Styrol, $\alpha$-Methylstyrol, p-tert.Butylstyrol, Chlorstyrol, Vinyltoluol, Vinylchlorid, Vinylbromid, Vinylfluorid, Vinylidenchlorid, Butadien, Isopren, Chloropren, Acrylsäure, Metharcylsäure, Arcrylamid, Methacrylamid, Acrylnitril, Methacrylnitril, Chloracrylnitril, Vinylacetat, Acrylsäureester und Methacrylsäureester.

9. Vliesstoffe nach Anspruch 8, dadurch gekennzeichnet, daß die mit Bis(2-chlorethyl)vinylphosphonat copolymerisierbare Verbindung ausgewählt ist aus der Gruppe bestehend aus Methylacrylat, Ethylacrylat, Hydroxyethylacrylat, Hydroxypropylacrylat, n-Butylacrylat, Isobutylacrylat, Methylmethacrylat, Ethylmethacrylat, Hydroxyethylmethacrylat, Hydroxypropylmethacrylat, n-Butylmetharcrylat und Isobutylmethacrylat.

10. Verfahren zur Herstellung der Vliesstoffe nach einem der Ansprüche 1 bis 9, bei dem eine Faserschicht mit einem Bindemittelbad auf der Basis eines Polymer-Latex in Berührung gebracht und zusammengedrückt wird, um das Eindringen des Polymeren in die Schicht sicherzustellen, und dann getrocknet wird.

**Claims**

1. Nonwovens comprising a layer of fibres fixed by at least one binder, characterized in that the said binder is an interpolymer composed of a copolymer A of butadiene, styrene and at least one ethylenic unsaturated carboxylic acid, and of polymer B of bis-(2-chloroehtyl)-vinyl phosphonate at least partially grafted onto the copolymer A.

2. Nonwovens according to claim 1, characterized in that the interpolymer is composed of 80 to 99% by weight of copolymer A and 20 to 1% by weight of polymer B.

3. Nonwovens according to either one of claims 1 and 2, characterized in that the copolymer A comprises, by weight, 25 to 55% of butadiene, 35 to 74% of styrene and 1 to 10% of at least one ethylenically unsaturated carboxylic acid.

4. Nonwovens according to any one of claims 1 to 3, characterized in that the polymer B comprises, by weight, 15 to 100% of bis-(2-chloroethyl)-vinyl phosphonate and 0 to 85% of at least one thylenically unsaturated compound copolymerisable with the bis-(2-chloroethyl)-vinyl phosphonate.

5. Nonwovens according to any one of claims 1 to 4, characterized in that the part of the interpolymer which is insoluble in isopropyl alcohol represents at least 75% of the interpolymer and contains, in the grafted state, 0,2 to 15% by weight of bis-2-chloroethyl)-vinyl phosphonate.

6. Nonwovens according to any one of claims 1 to 5, characterized in that the carboxylic acid is chosen from the group comprising acrylic acid, methacrylic acid, itaconic acid, maleic acid and fumaric acid.

7. Nonwovens according to claim 4, characterized in that the compound copolymerisable with the bis-(2chloroethyl)-vinyl phosphonate is chosen from the group comprising vinylaromatic compounds, vinyl halides, vinylidene halides, diene compounds, vinyl esters of carboxylic acids, and acrylic compounds.

8. Nonwovens according to claim 7, characterized in that the compound copolymerisable with the bis-(2-chloroethyl)-vinyl phosphonate is chosen from the group comprising styrene, $\alpha$-methylstyrene, para-tert.-butylstyrene, chlorostyrene, vinyltoluene, vinyl chloride, vinyl bromide, vinyl fluoride, vinylidene chloride, butadiene, isoprene, chloroprene, acrylic acid, methacrylic acid, acrylamide, methacrylamide, acrylonitrile, methacrylonitrile, chloroacrylonitrile, vinyl acetate, acrylic acid esters and methacrylic acid esters.

9. Nonwovens according to claim 8, characterized in that the compound copolymerisable with the bis-(2-chloroethyl)-vinyl phosphonate is chosen from the group comprising methyl acrylate, ethyl acrylate, hydroxyethyl acrylate, hydroxypropyl acrylate, n-butyl acrylate, isobutyl acrylate, methyl methacrylate, ethyl methacrylate, hydroxyethyl methacrylate, hydroxypropyl methacrylate, n-butyl methacrylate and isobutyl methacrylate.

10. Process for the manufacture of nonwovens according to any one of claims 1 to 9, in which a layer of fibres is placed in contact with a binding bath based on a polymer latex, compressed to ensure penetration of the polymer into the layer, and then dried.